Europäisches Patentamt

(19) European Patent Office

Office européen des brevets

(11) Veröffentlichungsnummer: **0 065 580**
**B1**

(12) **EUROPÄISCHE PATENTSCHRIFT**

(45) Veröffentlichungstag der Patentschrift:
16.01.85

(51) Int. Cl.⁴: **E 06 C 5/02,** B 60 R 3/02,
A 01 D 41/12

(21) Anmeldenummer: 81103937.9

(22) Anmeldetag: 22.05.81

(54) Hängeleiter für die Fahrerplattform eines Kraftfahrzeuges, insbesondere Mähdrescher.

(43) Veröffentlichungstag der Anmeldung:
01.12.82 Patentblatt 82/48

(45) Bekanntmachung des Hinweises auf die Patenterteilung:
16.01.85 Patentblatt 85/3

(84) Benannte Vertragsstaaten:
AT BE CH DE FR GB IT LI NL SE

(56) Entgegenhaltungen:
FR - A - 2 324 502
FR - A - 2 335 130

(73) Patentinhaber: DEERE & COMPANY, 1 John Deere
Road, Moline Illinois 61265 (US)

(72) Erfinder: Laberheim, René, Dipl.-Ing., 38, Rue Principale,
F-57720 Eschviller (FR)
Erfinder: Pauli, Klaus Herbert, Dipl.-Ing., Kantstrasse 12,
D-6650 Homburg-Einöd (DE)
Erfinder: Peller, Rolf Winfried, Dipl.-Ing.,
Heiligtalstrasse 11, D-6660 Zweibrücken (DE)
Erfinder: Schleicher, Walter, Ing. grad.,
Finkenstrasse 30, D-6663 Dellfeld (DE)

(74) Vertreter: Sartorius, Peter et al, DEERE & COMPANY
European Office, Patent Department
Postfach 503 Steubenstrasse 36-42,
D-6800 Mannheim 1 (DE)

ACTORUM AG

# Beschreibung

Die Erfindung bezieht sich auf eine Hängeleiter für die Fahrerplattform eines Kraftfahrzeuges, insbesondere Mähdrescher, die an der Aussenseite des Kraftfahrzeuges bzw. des Mähdreschers angeordnet ist und mehrere über zwei Seitenteile miteinander verbundene Leiterstufen aufweist, wobei ein unterer Teil mit mindestens einer Leiterstufe über Gelenke an einen oberen Teil der Hängeleiter vertikal schwenkbar angeschlossen und in einer Arbeitsstellung und mindestens einer weiteren Stellung am oberen Teil der Hängeleiter festlegbar ist, wobei der untere Teil der Hängeleiter über seine Gelenkstelle hinaus mit einer Verlängerung versehen ist, die zur Festlegung des unteren Teils gegen den oberen Teil der Hängeleiter zur Anlage bringbar ist.

Es ist bereits eine Hängeleiter bekannt (US-A Nr. 2967584), die aus einem feststehenden, an der Fahrerplattform des Mähdreschers angeordneten Teil besteht, an dessen Seitenteilen ein zweiter Teil einer Hängeleiter vertikal schwenkbar gelagert ist. Der zweite Teil der Hängeleiter ist hierzu über einen Gelenkbolzen an den linken Rahmenteil des feststehenden Teils der Hängeleiter angeschlossen und über eine Fangausnehmung mit einem Aufnahmeteil, der an dem feststehenden Teil der Hängeleiter angeordnet ist, lösbar verbunden, so dass die Hängeleiter über ein Zugseil um den Gelenkbolzen verschwenkt und in eine waagrechte Lage gebracht werden kann, so dass für die Hängeleiter die Bodenfreiheit bei Hangfahrten des Mähdreschers vergrössert wird.

Es ist ferner eine verschwenkbare Leiterstufe bekannt (FR-A Nr. 2335130), die an zwei verschwenkbaren Tragarmen gelagert ist. Soll beispielsweise die Leiterstufe in eine Transportstellung verschwenkt werden, so muss die untere Leiterstufe an die Arme herangeklappt werden, die dann um ihre oberen Anlenkstellen in eine horizontale Lage verschwenkt werden, um dann in einen bügelförmigen Rahmen hineingeschoben werden zu können. Eine derartige Leiterstufe ist für Mähdrescher nicht geeignet, da die untere Leiterstufe am Mähdrescher seitlich zu weit herausstehen würde, so dass sie beim Arbeitseinsatz des Mähdreschers grundsätzlich in eine Transportlage gebracht werden müsste.

Ferner ist eine Hängeleiter der eingangs aufgeführten Art bekannt (FR-A Nr. 2324502), die einen an einer Aussenseite des Fahrzeuges feststehenden oberen Leiterteil zeigt, an dem ein unterer verschwenkbarer Leiterteil angeordnet ist. Der untere Leiterteil ist über eine Gelenkverbindung mit dem oberen Leiterteil schwenkbar verbunden. Die Gelenkverbindung besteht aus zwei schräg verlaufenden Laschen, wobei die obere Lasche einen Gelenkbolzen trägt, der sich durch eine Langlochöffnung der unteren Lasche des verschwenkbaren Leiterteils erstreckt. In der unteren bzw. in der Arbeitsstellung der Hängeleiter liegt die obere Stirnkante des verschwenkbaren Leiterteils gegen die untere Stirnkante des oberen Leiterteils an und legt dadurch den verschwenkbaren Leiterteil fest.

Der untere Leiterteil lässt sich um den Gelenkbolzen um 180° verschwenken, bis er mit seiner Stirnkante gegen die Stirnkante des oberen feststehenden Leiterteils anliegt. Da die Lasche des verschwenkbaren Leiterteils auf der feststehenden Lasche in Längsrichtung der Langlochbohrung verstellbar ist, kann in der oberen Stellung des Leiterteils eine geringfügige Abwärtsverstellung des verschwenkbaren Leiterteils vorgenommen werden, bis die Lasche gegen die untere Stirnkante des feststehenden Leiterteils zur Anlage kommt und dadurch eine Verschwenkung des Leiterteils nach unten verhindert. Erst wenn der Leiterteil wieder nach oben verschwenkt worden ist, lässt sich der verstellbare Leiterteil um den Gelenkbolzen nach unten verschwenken. Da beide Leiterteile in der Arbeitsstellung genau in der gleichen Ebene liegen, kann eine Verstellung des unteren Leiterteils nach oben nicht ohne weiteres vom Bedienungsstand des Mähdreschers aus vorgenommen werden.

Demgegenüber liegt der Erfindung die Aufgabe zugrunde, den unteren verschwenkbaren Teil der Hängeleiter derart mit der Hängeleiter zu verbinden, dass die gesamte Hängeleiter über den unteren Teil der Hängeleiter in eine Transportlage ohne weiteres verstellbar ist. Diese Aufgabe ist dadurch gelöst worden, dass der untere Teil der Hängeleiter über die Verlängerung in seiner Arbeitsstellung gegen die Rückseite des oberen Teils der Hängeleiter zur Anlage bringbar ist sowie über den der Verlängerung gegenüberliegenden, an das Gelenk angrenzenden Teil in einer zweiten Stellung, in der der untere Teil als Hebelarm einsetzbar ist, gegen eine untere im Bereich der Gelenkstelle vorgesehene Stirnkante des oberen Teils der Hängeleiter zur Anlage bringbar und an dieser festlegbar ist und dass in dieser Stellung beide Teile der Hängeleiter mittels einer Zugeinrichtung gemeinsam nach oben schwenkbar sind. Durch die vorteilhafte Anordnung des unteren Teils der Hängeleiter ist es möglich, diese in einer Betriebsstellung ohne weiteres zu arretieren bzw. in einer bestimmten Stellung festzulegen, so dass bei Betreten des unteren Teils der Hängeleiter dieser Teil nicht weiter verschwenkt werden kann, da die unteren Holme des unteren Teils der Hängeleiter über die Gelenkstelle hinaus verlängert sind und gegen die Rückseite des oberen Teils der Hängeleiter zur Anlage kommen, so dass nach Herunterklappen des unteren Teils dieser in einer annähernd vertikalen Lage am oberen Teil festlegbar ist. Auf diese Weise kann die Bedienungsperson den unteren Teil der Hängeleiter ohne weiteres betreten. Soll jedoch die Hängeleiter, d. h. der untere Teil und auch der obere Teil der Hängeleiter, in eine Transportlage verschwenkt werden, so braucht die Bedienungsperson lediglich den unteren Teil der Hängeleiter nach oben zu verschwenken, bis die beiden Holme unterhalb ihrer Gelenkstelle gegen die Unterkante des oberen Teils der Hängeleiter zur Anlage kommen, in der sie mit dem oberen Teil einen annähernd rechten Winkel bilden. Durch die Verwendung eines Zugseils, das an das untere Ende des unteren Teils der Hängeleiter angeschlossen ist, kann nunmehr die Bedienungsperson leicht beide Teile der Hängeleiter gemeinsam nach oben in eine annähernd vertikale Lage verschwenken, da hierzu ein ausreichend grosser Hebelarm zur Verfügung steht, der zusätzlich aus dem unteren Teil der Hängeleiter gebildet wird. Auf diese Weise lässt sich der Mähdrescher bei Hangfahrt ohne weiteres einsetzen, ohne dass eine Beschädigung der Hängeleiter zu befürchten ist. Ebenso ist es möglich, die Hängeleiter bei reinen Transportfahrten nach oben zu verschwenken.

Gemäss der Erfindung ist es ferner vorteilhaft, dass die Gelenke in einer im oberen Teil der Hängeleiter vorgesehenen Langlochöffnung in etwa horizontal verschiebbar gelagert und in eine vordere Stellung verstellbar sind, in der die Gelenke eine Lage vor der als Anlagefläche dienenden Stirnkante einnehmen und in eine hintere Stellung verschiebbar sind, in der die Gelenke eine Lage hinter der Stirnkante einnehmen. Durch die Verwendung einer Langlochführung, die unterhalb der Unterkante des oberen Teils der Hängeleiter vorgesehen ist, kann auf einfache Weise der untere verschwenkbare Teil der Hängeleiter in zwei Stellungen ohne weiteres festgelegt werden, so dass die Hängeleiter einerseits insgesamt als Hängeleiter zur Verfügung steht, andererseits der untere Teil der Hängeleiter als Hebelarm zum Verschwenken der gesamten Hängeleiter eingesetzt werden kann.

In weiterer Ausgestaltung der Erfindung ist es vorteilhaft, dass die untere Leiterstufe in einer annähernd vertikalen und einer annähernd horizontalen Lage festlegbar ist. Durch die vorteilhafte Verbindung der unteren Seitenteile der Leiterstufe mit den oberen Seitenteilen der Leiterstufen ist es auf einfache Weise möglich, die untere Leiterstufe bzw. die zugehörigen Seitenteile in einer Stellung in etwa in der gleichen Ebene wie die oberen Seitenteile und in einer weiteren Stellung zu arretieren, in der die unteren Seitenteile mit den oberen Seitenteilen einen Winkel zwischen 60 und 120° einschliessen. Schliessen beispielsweise die unteren Seitenteile einen Winkel mit den oberen Seitenteilen ein, so lassen sich auf einfache Weise die beiden verstellbaren Leiterteile über ein Zugseil ohne weiteres in eine Transportlage verstellen. Hierzu ist es vorteilhaft, dass der obere Seitenteil der Hängeleiter vertikal schwenkbar am Mähdrescher gelagert und in einer Transportlage selbsttätig arretierbar ist. Vorteilhaft ist es ferner, dass die oberen und die unteren Seitenteile der Hängeleiter jeweils um 180° verschwenkbar gelagert sind.

In den Zeichnungen ist eine in der Beschreibung näher erläuterte Hängeleiter für die Fahrerplattform eines Mähdreschers nach der Erfindung dargestellt.

Es zeigt

Fig. 1 eine perspektivische Darstellung einer Hängeleiter,

Fig. 2 eine teilweise dargestellte Fahrerplattform eines Mähdreschers mit daran angeschlossener Hängeleiter in einer angehobenen Stellung,

Fig. 3 eine Teilansicht der Hängeleiter teilweise im Schnitt, mit zwei verschiedenen Endlagestellungen der unteren Leiterstufe.

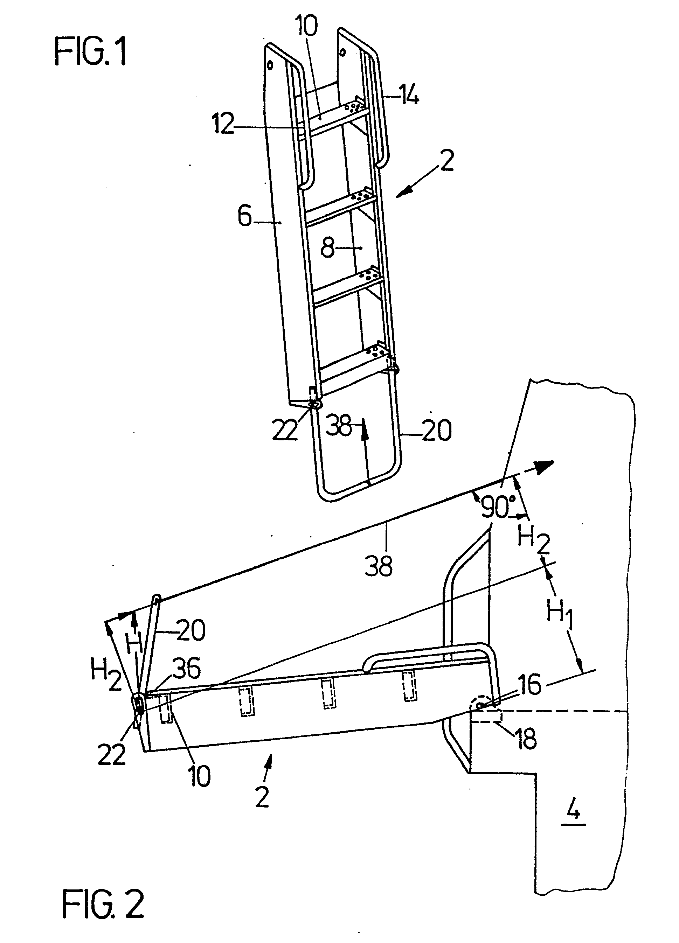

In der Zeichnung ist mit 2 eine Hängeleiter bezeichnet, die an eine Fahrerplattform 4 eines in der Zeichnung nicht weiter dargestellten Mähdreschers vertikal schwenkbar angeschlossen ist. Die Hängeleiter 2 besteht aus zwei vertikal verlaufenden Seitenteilen 6 und 8, die über mehrere Leiterstufen 10 starr miteinander verbunden sind. Die Leiterstufen 10 können hierzu beispielsweise mit den Seitenteilen 6 und 8 verschweisst oder über Nieten verbunden sein. Die einzelnen Leiterstufen 10 sind an ihrer Oberfläche aufgerauht, so dass sie für die Bedienungsperson trittsicher sind. Es ist auch möglich, die einzelnen Leiterstufen 10 mit einer Gummioberfläche zu versehen. Am oberen Ende der Hängeleiter 2 sind an den Seitenteilen 6 und 8 für die Bedienungsperson Griffe 12 und 14 vorgesehen, an denen sich die Bedienungsperson bei betreten der Leiter festhalten kann. Die Hängeleiter 2 ist, wie Fig. 2 zeigt, an die Fahrerplattform 4 eines in der Zeichnung nicht dargestellten Mähdreschers vertikal schwenkbar angeschlossen, so dass die von einer normalen Lage (gemäss Fig. 1) in eine in der Zeichnung nicht dargestellte Transportlage nach oben um 180° verschwenkt werden kann, in der die Hängeleiter 2 etwa eine vertikale Lage einnimmt, in der die äussere Begrenzung der Leiterstufe in etwa auf der gleichen Ebene wie die eine Aussenseite der Fahrerplattform 4 des Mähdreschers liegt. In der oberen Transportlage lässt sich die Hängeleiter 2 über eine in der Zeichnung nicht dargestellte Arretierungsvorrichtung feststellen, die beispielsweise aus einer federbelasteten Klinke bestehen kann, die in eine an der Hängeleiter 2 vorgesehene Raststelle einrasten kann. Um die Hängeleiter 2 verschwenken zu können, ist sie an ihrem oberen Ende über Gelenkbolzen 16 an eine an der Fahrerplattform 4 vorgesehene Halterung 18 angeschlossen. Am unteren stirnseitigen Ende der beiden Seitenteile 6 und 8 ist eine aus einem U-Bügel gebildete Leiterstufe 20 über zwei Gelenkbolzen 22 vertikal schwenkbar angeschlossen. Die Gelenkbolzen 22 sind hierzu in in einer Halterung 24 vorgesehene Langlochöffnungen 26 gesteckt, so dass die untere Leiterstufe 20 mittels der Gelenkbolzen 22 in der Langlochöffnung 26 horizontal verschoben werden kann.

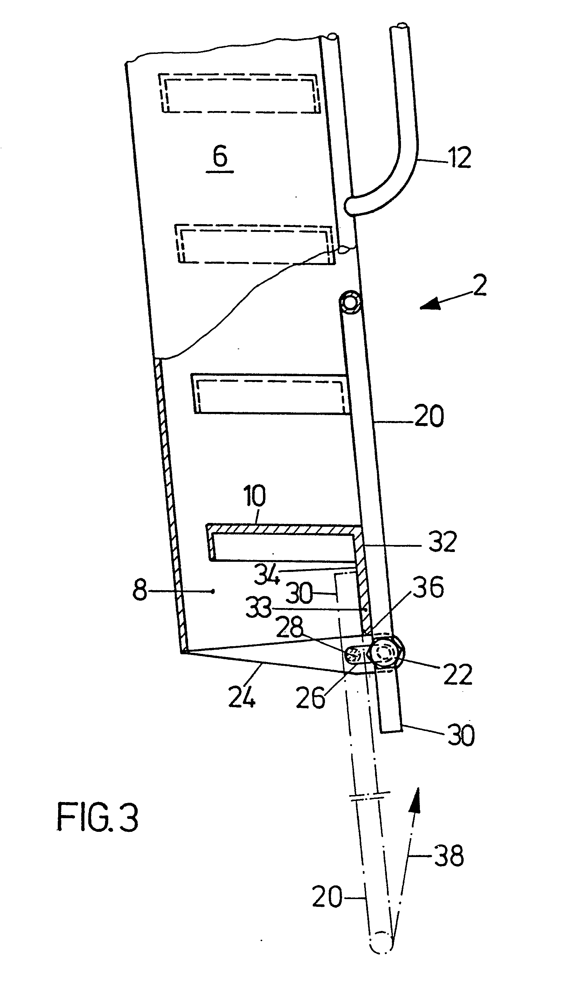

Die Langlochöffnung 26 ist soweit in den Bereich der vorderen Stirnseite der Halterung 24 verlegt, dass der zugehörige Bolzenschaft 28 des Gelenkbolzens 22 in der nach oben verschwenkten Stellung der unteren Leiterstufe 20 gemäss Fig. 3 eine Lage vor der Stirnseite 32 der unteren Leiterstufe 10 einnimmt. Nur in dieser Stellung lässt sich die untere Leiterstufe 20 aus der in gestrichelten Linien dargestellten in die in aus gezogen Linien dargestellte Stellung (Fig. 3) verschwenken.

In der Stellung der unteren Leiterstufe 20 (gestrichelte Darstellung, Fig. 3) ist der Gelenkbolzen 22 in der Langlochöffnung 26 nach hinten verstellt, so dass der Bolzenschaft 28 an die hintere Begrenzung der Langlochöffnung 26 anliegt, so dass die untere Leiterstufe 20 in der in gestrichelten Linien dargestellten Stellung arretiert werden kann. Da die untere Leiterstufe 20 über den Gelenkbolzen 22 hinaus mit einer Verlängerung 30 versehen ist, dient die Verlängerung 30 in der Stellung gemäss Fig. 1 der unteren Leiterstufe 20 als Arretierungselement, da sie gegen die Rückseite eines vertikalen Schenkels 33 der unteren Leiterstufe 10 zur Anlage kommt. In dieser Stellung kann bei Betreten der unteren Leiterstufe 20 durch die Bedienungsperson die Leiterstufe nicht weiter im Uhrzeigerdrehsinn verschwenkt werden, da die Rückseite 34 des Schenkels 33 ein weiteres Verschwenken der Verlängerung 30 um den Gelenkbolzen 22 verhindert. An die untere Leiterstufe 20 kann, wie aus Fig. 2 hervorgeht, ein Zugseil 38 angeschlossen werden, das bis in den Bereich der Fahrerplattform 4 reicht, so dass die Bedienungsperson die Leiterstufe 2 mit der zugehörigen verschwenkbaren Leiterstufe 20 über das Zugseil 38 in eine obere Transportlage verschwenken kann.

Die in Fig. 1 dargestellte Stellung der Hängeleiter 2 zeigt die normale Arbeitsstellung der Hängeleiter, in der die Bedienungsperson die untere Leiterstufe 20 sowie die nachfolgenden Leiterstufen 10 ohne weiteres betreten kann, um die Fahrerplattform 4 zu erreichen. Durch den vorteilhaften Anschluss der unteren Leiterstufe 20 an die untere Stirnseite der Hängeleiter 2 lässt sich die untere Leiterstufe ohne weiteres von der Stellung gemäss Fig. 1 in eine Stellung gemäss Fig. 3 verschwenken, in der die eine Stirnseite der Leiterstufe 20 gegen die Stirnseite 32 der beiden unteren Leiterstufen 10 zur Anlage kommt. Auf diese Weise erhält man eine Bodenfreiheit für die Hängeleiter 2, so dass eine Beschädigung der Hängeleiter vermieden werden kann, insbesondere dann, wenn der Mähdrescher in einem unebenen Gelände oder beispielsweise am Hang von geringerer Neigung arbeitet. Soll aus bestimmten Gründen jedoch die Bodenfreiheit für die Hängeleiter 2 vergrössert werden, so kann wie aus Fig. 2 hervorgeht, die Hängeleiter auch über das Zugseil 38 in eine obere Transportlage verschwenkt werden, in der die Hängeleiter sowie die untere Leiterstufe 20 eine obere vertikale Lage einnehmen. Die Bedienungsperson braucht dann lediglich das Zugseil 38 nach oben zu ziehen, wobei die untere Leiterstufe 20 zuerst um ihre Gelenkbolzen 22, die sich gemäss Fig. 1 in der hinteren Stellung befinden nach oben schwenkt, bis die untere Leiterstufe 20 gegen die untere Stirnkante 36 der untersten Leiterstufe 10 zur Anlage kommt. Da die Gelenkbolzen bei diesem Schwenkvorgang in ihrer hinteren Stellung in der Langlochöffnung 26 bleiben, lässt sich bei Anlage der Leiterstufe 20 gegen die Stirnkante 36 keine weitere Verschwenkung der Leiterstufe 20 mehr durchführen (Fig. 2). In dieser Stellung schliesst die Leiterstufe 20 mit der Stirnseite der Hängeleiter 2 einen Winkel ein, der beispielsweise eine Grösse zwischen 60 und 120° aufweisen kann. Zieht also die Bedienungsperson das Zugseil 38 nach oben, so stellt die Leiterstufe 20 mit der Hängeleiter 2 eine starre Verbindung dar. Da die Leiterstufe 20 in der Stellung gemäss Fig. 2 mit Bezug auf die Hängeleiter 2 nach vorne gerichtet ist, erhält man einen um die Grösse des Hebelarmes H2, der am Gelenkbolzen 22 angreift, vergrösserten Gesamthebelarm H1 + H2, so dass die Bedienungsperson die Hängeleiter 2 auch dann ohne weiteres nach oben ziehen kann, wenn infolge ungünstiger Stellung der Hängeleiter 2 der Hebelarm H1 verkleinert wird. Auf diese Weise können die Zugkräfte, die an das äussere Ende der Leiterstufe 20 über das Zugseil 38 einwirken, relativ klein gehalten werden. Hat die Hängeleiter 2 eine obere vertikale Lage eingenommen, so braucht nunmehr lediglich die untere Leiterstufe 20 in der Langlochöffnung 26 nach vorne gezogen zu werden, so dass die Gelenkbolzen 22 eine Lage gemäss Fig. 3 einnehmen, in der die Leiterstufe 20 an die Hängeleiter 2 herangeklappt ist. Auf diese Weise steht die Hängeleiter bei Fahrten des Mähdreschers an steileren Hängen nicht mehr im Wege.

Die in der Zeichnung dargestellte Hängeleiter 2, die vorzugsweise bei Mähdreschern eingesetzt werden kann, lässt sich auch bei anderen Fahrzeugen ohne weiteres einsetzen, wenn es notwendig ist, eine Hängeleiter aus einer Arbeitsstellung in eine annähernd vertikale Transportstellung zu verschwenken.

## Patentansprüche

1. Hängeleiter (2) für die Fahrerplattform (4) eines Kraftfahrzeuges, insbesondere Mähdrescher, die an der Aussenseite des Kraftfahrzeuges bzw. des Mähdreschers angeordnet ist und mehrere über zwei Seitenteile (6, 8) miteinander verbundene Leiterstufen (10) aufweist, wobei ein unterer Teil mit mindestens einer Leiterstufe über Gelenke (22) an einen oberen Teil der Hängeleiter (2) vertikal schwenkbar angeschlossen und in einer Arbeitsstellung und mindestens einer weiteren Stellung am oberen Teil der Hängeleiter (2) festlegbar ist, wobei der untere Teil der Hängeleiter (2) über seine Gelenkstelle hinaus mit einer Verlängerung (30) versehen ist, die zur Festlegung des unteren Teils gegen den oberen Teil der Hängeleiter (2) zur Anlage bringbar ist, dadurch gekennzeichnet, dass der untere Teil der Hängeleiter (2) über die Verlängerung (30) in seiner Arbeitsstellung gegen die Rückseite des oberen Teils der Hängeleiter (2) zur Anlage bringbar ist sowie über den der Verlängerung (30) gegenüberliegenden, an das Gelenk (22) angrenzenden Teil in einer zweiten Stellung, in der der untere Teil als Hebelarm einsetzbar ist, gegen eine untere im Bereich der Gelenkstelle vorgesehene Stirnkante (36) des oberen Teils der Hängeleiter (2) zur Anlage bringbar und an dieser festlegbar ist und dass in dieser Stellung beide Teile der Hängeleiter mittels einer Zugeinrichtung (38) gemeinsam nach oben schwenkbar sind.

2. Hängeleiter nach Anspruch 1, dadurch gekennzeichnet, dass die Gelenke in einer im oberen Teil der Hängeleiter (2) vorgesehenen Langlochöffnung (26) in etwa horizontal verschiebbar gelagert und in eine vodere Stellung verstellbar sind, in der die Gelenke eine Lage vor der als Anlagefläche dienenden Stirnkante (36) einnehmen und in eine hintere Stellung verschiebbar sind, in der die Gelenke eine Lage hinter der Stirnkante (36) einnehmen.

3. Hängeleiter nach einem oder mehreren der vorhergehenden Ansprüche, dadurch gekennzeichnet, dass die untere Leiterstufe (20) in einer annähernd vertikalen und einer annähernd horizontalen Lage festlegbar ist.

4. Hängeleiter nach einem oder mehreren der vorhergehenden Ansprüche, dadurch gekennzeichnet, dass die aussenliegende Stirnseite der unteren Leiterstufe (20) bzw. die zugehörigen Seitenteile in der Transportstellung in etwa in der gleichen Ebene liegen wie die Stirnfläche der oberen Seitenteile (6, 8) und dass die Leiterstufe (20) in einer anderen Stellung arretierbar ist, in der die unteren Seitenteile mit den oberen Seitenteilen (6, 8) einen Winkel zwischen 60 und 120° einschliessen.

5. Hängeleiter nach einem oder mehreren der vorhergehenden Ansprüche, dadurch gekennzeichnet, dass der obere Teil der Hängeleiter (2) vertikal verschwenkbar am Mähdrescher gelagert und in einer Transportlage selbsttätig arretierbar ist.

6. Hängeleiter nach einem oder mehreren der vorhergehenden Ansprüche, dadurch gekennzeichnet, dass die oberen und unteren Seitenteile der Hängeleiter (2, 20) jeweils um 180° verschwenkbar gelagert sind.

## Claims

1. A hanging ladder (2) for the driving platform (4) of a motor vehicle, in particular a combine harvester, which is arranged at the exterior of the motor vehicle or combine harvester and which has plurality of ladder steps (10) interconnected by means of two side members (6, 8) wherein a lower portion having at least one ladder step is vertically pivotally connected by way of hinges (22) to an upper portion of the ladder (2) and can be fixed in an operative position and at least one further position at the upper portion of the ladder (2), wherein the lower portion of the ladder (2), beyond its hinge point, is provided with an extension (30) which can be caused to bear against the upper portion of the ladder (2), to secure the lower portion in position, characterised in that the lower portion of the ladder (2) can be caused to bear, by way of the extension (30), in its operative position against the back of the upper portion of the ladder (2) and can be caused to bear, by way of the portion which is disposed in opposite relationship to the extension (30) and which adjoins the hinge (22), in a second position in which the lower portion can be used as a lever arm, against an end edge (36), which is provided in the region of the hinge point, on the upper portion of the ladder (2), and can be fixed at said end edge, and that in said position both portions of the ladder are jointly pivotal upwardly by means of a pulling device (38).

2. A ladder according to Claim 1, characterised in that the hinges are mounted displaceably substantially horizontally in a slot opening (26) provided in the upper portion of the ladder (2) and can be moved into a forward position in which the hinges occupy a position in front of the end edge (36) serving as an abutment surface, and can be displaced into a rearward position in which the hinges occupy a position behind the end edge (36).

3. A ladder according to one or more of the preceding claims, characterised in that the bottom ladder step (20) can be secured in an approximately vertical and an approximately horizontal position.

4. A ladder according to one or more of the preceding claims, characterised in that the outward front end of the bottom ladder step (20) or the associated side members lie in the transportation position approximately in the same plane as the front face of the upper side members (6, 8), and that the ladder step (20) can be arrested in another position in which the lower side members enclose an angle of between 60 and 120° to the upper side members (6, 8).

5. A ladder according to one or more of the preceding claims, characterised in that the upper portion of the ladder (2) is vertically pivotally mounted on the combine harvester and can be automatically arrested in a transportation position.

6. A ladder according to one or more of the preceding claims, characterised in that the upper and lower side members of the ladder (2, 20) are each mounted pivotally through 180°.

## Revendications

1. Echelle suspendue (2) pour la plate-forme de conduite (4) d'un véhicule à moteur, en particulier d'une moissonneuse-batteuse, disposée sur le côté extérieur du véhicule à moteur ou de la moissonneuse-batteuse et comportant plusieurs marches (10) reliées entre elles par deux éléments latéraux (6, 8), une partie inférieure comprenant au moins une marche étant reliée par des articulations (22) à une partie supérieure de l'échelle suspendue (2) de manière à pouvoir pivoter verticalement, et pouvant être immobilisée sur la partie supérieure de l'échelle suspendue (2) dans une position de travail ou de service et dans au moins une autre position, la partie inférieure de l'échelle suspendue (2) étant munie, au-delà de son point d'articulation, d'un prolongement (30) qui peut être amené dans une position d'application contre la partie supérieure de l'échelle suspendue (2) pour immobiliser la partie inférieure, caractérisée en ce que la partie inférieure de l'échelle suspendue (2) peut être amenée, par son prolongement (30), en position de travail, dans une position d'application contre la face arrière de la partie supérieure de l'échelle suspendue (2), ainsi que, par la partie opposée au prolongement (30) et se raccordant à l'articulation (22), dans une seconde position dans laquelle la partie inférieure est utilisable comme bras de levier, dans une position d'application contre un bord inférieur (36) de la partie supérieure de l'échelle suspendue (2), prévu au voisinage du point d'articulation, en pouvant être immobilisée contre cette partie supérieure, et en ce que, dans cette position, les deux parties de l'échelle suspendue peuvent être déplacées conjointement par pivotement vers le haut au moyen d'un dispositif de traction (38).

2. Echelle suspendue suivant la revendication 1, caractérisée en ce que les articulations sont montées de façon à pouvoir se déplacer, en principe horizontalement, dans un orifice en forme de trou oblong ou de fente (26) prévu dans la partie supérieure de l'échelle suspendue (2), et peuvent être amenées dans une position antérieure dans laquelle ces articulations viennent occuper une position située en avant du bord (36) servant de surface de butée, ainsi que dans une position arrière dans laquelle ces articulations viennent occuper une position située derrière ce bord (36).

3. Echelle suspendue suivant l'une des revendications précédentes, caractérisée en ce que la marche inférieure (20) peut être immobilisée dans une position sensiblement verticale et dans une position sensiblement horizontale.

4. Echelle suspendue suivant l'une des revendications précédentes, caractérisée en ce que les côtés extérieurs de la marche inférieure (20) ou les éléments latéraux conjugués se trouvent, dans la position de transport, sensiblement dans le même plan que la face avant des éléments latéraux supérieurs (6, 8), et en ce que la marche (20) peut être bloquée dans une autre position dans laquelle les éléments latéraux inférieurs forment avec les éléments latéraux supérieurs (6, 8) un angle compris entre 60 et 120°.

5. Echelle suspendue suivant l'une des revendications précédentes, caractérisée en ce que la partie supérieure de l'échelle suspendue (2) est montée de façon à pouvoir pivoter verticalement sur la moissonneuse-batteuse et peut être verrouillée automatiquement dans une position de transport.

6. Echelle suspendue suivant l'une des revendications précédentes, caractérisée en ce que les éléments latéraux supérieurs et inférieurs de l'échelle suspendue (2, 20) sont montés de façon à pouvoir pivoter chacun de 180°.

FIG.1

FIG. 2

FIG. 3